# EUROPÄISCHE PATENTSCHRIFT

(11) **EP 4 369 752 B1**
(45) Veröffentlichungstag und Bekanntmachung des Hinweises auf die Patenterteilung: **16.07.2025**
(21) Anmeldenummer: 22206470.1
(22) Anmeldetag: 09.11.2022
(51) Int. Cl.: H04W 4/80, H04L 12/28, H04L 67/12

(54) **VERFAHREN ZU EINEM AUFBAU EINER STEUERVERBINDUNG, MOBILES ENDGERÄT, SATZ AUS EINEM MOBILEN ENDGERÄT UND EINEM HAUSHALTSGERÄT SOWIE VERFAHREN ZUM NACHRÜSTEN EINES HAUSHALTSGERÄTS**
METHOD FOR ESTABLISHING A CONTROL CONNECTION, MOBILE TERMINAL, SET OF A MOBILE TERMINAL AND A DOMESTIC APPLIANCE AND METHOD FOR RETROFITTING A DOMESTIC APPLIANCE
PROCÉDÉ D'ÉTABLISSEMENT D'UNE LIAISON DE COMMANDE, TERMINAL MOBILE, ENSEMBLE D'UN TERMINAL MOBILE ET D'UN APPAREIL MÉNAGER ET PROCÉDÉ DE RÉÉQUIPEMENT D'UN APPAREIL MÉNAGER

(43) Veröffentlichungstag der Anmeldung: 15.05.2024
(73) Patentinhaber: JURA ELEKTROAPPARATE AG, 4626 Niederbuchsiten (CH)
(72) Erfinder: Karimian, Amir, 4414 Füllinsdorf (CH)
(74) Vertreter: Mertzlufft-Paufler, Cornelius

(56) Entgegenhaltungen:
- CN-A- 111 487 880
- US-A1- 2019 208 421

## Beschreibung

Die Erfindung betrifft ein Verfahren zu einem Aufbau einer Steuerverbindung zwischen einem Haushaltsgerät und einem mobilen Endgerät. Bei dem Haushaltsgerät kann es sich zum Beispiel um eine Kaffeemaschine, wie insbesondere einem Kaffeevollautomaten, handeln. Das mobile Endgerät kann zum Beispiel ein Smartphone oder ein Tablet sein.

Um die Bedienung eines Haushaltsgeräts für einen Nutzer zu vereinfachen, ist es bereits möglich, dieses mit mobilen Endgeräten zu verbinden, um mittels eines mobilen Endgeräts Befehle über eine leicht zu bedienende Benutzeroberfläche an das Haushaltsgerät zu übermitteln.

US 2019/208421 A1 offenbart Verfahren, um Endgeräte zu verbinden. CN 111 487 880 A offenbart ein weiteres Verfahren, um Endgeräte zu verbinden.

Um eine vorzugsweise gesicherte Steuerverbindung zwischen einem mobilen Endgerät und einem Haushaltsgerät herstellen zu können, um im Normalbetrieb die Steuerung des Haushaltsgeräts über das mobile Endgerät vornehmen zu können, ist es erforderlich, dass ein Nutzer sein mobiles Endgerät zunächst mit dem Haushaltsgerät verknüpft (dieser Schritt wird auch als "Pairing" bzw. "Onboarding" bezeichnet).

Es besteht die Aufgabe, den Schritt der Verknüpfung zwischen einem mobilen Endgerät und einem Haushaltsgerät zu verbessern. Eine Lösung dieser Aufgabe wird durch ein Verfahren zu einem Aufbau einer Steuerverbindung zwischen einem Haushaltsgerät und einem mobilen Endgerät mit den Merkmalen nach Anspruch 1 bereitgestellt.

Insbesondere wird zur Lösung der Aufgabe ein Verfahren der zuvor genannten Art vorgeschlagen, wobei an oder bei dem Haushaltsgerät eine von außen vorzugsweise berührungslos auslesbare Information, beispielsweise eine geräteunspezifische Information, vorgehalten wird, gekennzeichnet durch die folgenden Schritte:
- maschinelles Einlesen der Information
- Prüfung, ob zu dieser Information in der Vergangenheit bereits eine Datenverbindung aufgebaut worden ist und/oder ob zu dieser Information in der Vergangenheit bereits ein maschinenspezifischer Identifikator zugeordnet wurde, und,
- wenn ein Ergebnis der Prüfung negativ ist, Aufbau einer vorzugsweise direkten Datenverbindung zwischen Haushaltsgerät und mobilem Endgerät zum Bezug eines maschinenspezifischen Identifikators vom Haushaltsgerät und Zuordnung des Identifikators zur Information, oder,
- wenn das Ergebnis der Prüfung positiv ist, Nutzung des Identifikators zum Aufbau der Steuerverbindung.

Ist also in der Vergangenheit noch keine Datenverbindung zu der auslesbaren Information aufgebaut worden, ist diese Information noch nicht zu dem maschinenspezifischen Identifikator des Haushaltsgeräts zugeordnet und könnte theoretisch auch zu einem maschinenspezifischen Indikator eines anderen Haushaltsgeräts zugeordnet werden. Anders ausgedrückt kann die auslesbare Information zunächst eine vom maschinenspezifischen Identifikator unabhängig Information sein. Dies hat den Vorteil, dass bei der Zuordnung der auslesbaren Information zum Haushaltsgerät nicht darauf geachtet werden muss, ob die (im Allgemeinen nicht ohne Hilfsmittel durch eine Person) auslesbare Information zum Haushaltsgerät gehört oder diesem richtig zugeordnet wurde. Wäre die auslesbare Information bereits spezifisch für ein Haushaltsgerät oder ein bestimmtes Modell eines Haushaltsgeräts ausgelegt, würde dies eine mögliche Fehlerquelle schaffen, da eine solche haushaltsgerätespezifische auslesbare Information einem falschen Haushaltsgerät, wie einem falschen Modell und/oder einem falschen Standort, zugeordnet werden könnte. Das wiederum könnte zur Folge haben, dass eine Steuerverbindung fehlerhaft eingerichtet wird und/oder dass zur Steuerung mittels des mobilen Endgeräts an das Haushaltsgerät übermittelte Befehle inkompatibel sind. Erfindungsgemäß kann die Zuordnung der auslesbaren Information zum Identifikator daher durch den erstmaligen Aufbau einer Datenverbindung zwischen dem mobilen Endgerät und dem Haushaltsgerät erfolgen. Zum Beispiel kann eine Datenverbindung vorzugsweise automatisiert mit einem mobilen Endgerät hergestellt werden, das dem Haushaltsgerät lokal am nächsten ist und/oder welches das stärkste Verbindungssignal aufweist. Nachdem eine Zuordnung der auslesbaren Information zum Identifikator erfolgt ist, kann eine Steuerverbindung, also vorzugsweise eine andere Datenverbindung für den Normalbetrieb, zwischen dem mobilen Endgerät und dem Haushaltsgerät eingerichtet werden. In Fällen, in denen bereits zuvor eine Zuordnung zwischen der auslesbaren Information und dem Identifikator vorgenommen wurde, ist es nicht mehr erforderlich, diesen Zuordnungsschritt erneut auszuführen. Hier kann somit direkt eine Nutzung des Identifikators zum Aufbau einer Steuerverbindung erfolgen. Die Erfindung ermöglicht es somit, Informationen, die zu einem Aufbau einer Steuerverbindung zwischen einem mobilen Endgerät und einem Haushaltsgerät benötigt werden, zu beziehen, ohne dass das Haushaltsgerät bei jedem Verbindungsaufbau der Steuerverbindung mit dem Internet oder einer Zentralinstanz verbunden sein muss. Die Erfindung erlaubt weiter die Verwendung einfacher Speichermittel, insbesondere unveränderlicher Speichermittel wie beispielsweise Bedruckungen, zum Bereitstellen der auslesbaren Information.

Nachfolgend werden vorteilhafte Weiterbildungen der Erfindung beschrieben, die allein oder mit den Merkmalen anderer hierin beschriebener und/oder beanspruchter Weiterbildungen mit den Merkmalen nach Anspruch 1 kombiniert werden können.

Gemäß einer vorteilhaften Weiterbildung des Verfahrens kann bei der Prüfung, ob zu dieser Information in der Vergangenheit bereits eine Datenverbindung aufgebaut worden ist, insbesondere eine zur Steuerverbindung abweichende Datenverbindung aufgebaut worden ist, überprüft werden, ob im mobilen Endgerät und/oder auf einem externen Speicher, wie zum Beispiel einem Server, und/oder bei dem Haushaltsgerät ein zu der Information zugeordneter maschinenspezifischer Identifikator verfügbar ist. Alternativ oder zusätzlich kann auch verifiziert werden, ob eine Information über eine erfolgreiche Prüfung in der Vergangenheit stattgefunden hat, beispielsweise durch Auslesen eines entsprechenden Kontrollbits. Dieses kann beispielsweise zur Ermittlung von Verbindungsdaten verwendbar sein.

Gemäß einer möglichen Ausgestaltung kann auf dem mobilen Endgerät die Zuordnung zwischen auslesbarer Information und Identifikator gespeichert werden. Dies hat den Vorteil, dass der Nutzer sein mobiles Endgerät nur einmalig mit dem Haushaltsgerät über das beschriebene Verfahren verknüpfen muss, um anschließend durch dasselbe mobile Endgerät auf die eingerichtete Steuerverbindung zur Steuerung des Haushaltsgeräts zurückgreifen zu können. Weiter ist es denkbar, dass durch die einmalige Ausführung des Verfahrens der Nutzer eine Steuerverbindung mit baugleichen Haushaltsgeräten an gegebenenfalls anderen Standorten nutzen kann, ohne dass eine erneute Einrichtung der Steuerverbindung mit dem baugleichen Haushaltsgerät erforderlich ist. Beispielsweise könnte hierbei vorgesehen sein, dass das Haushaltsgerät das mobile Endgerät ausliest.

Alternativ oder zusätzlich kann die Zuordnung des Identifikators zur Information auch bei dem Haushaltsgerät, insbesondere als Teil der auslesbaren Information, hinterlegt sein.

Gemäß einer weiteren vorteilhaften Ausgestaltung kann beim Aufbau der Datenverbindung das Haushaltsgerät auf dem mobilen Endgerät aus einer Liste von verfügbaren Verbindungsteilnehmern vorzugsweise manuell ausgewählt werden. Dies ermöglicht dem Nutzer, selbst eine Auswahl zu treffen, mit welchem Haushaltsgerät eine Steuerverbindung durch das beschriebene Verfahren eingerichtet werden soll.

Gemäß einer anderen vorteilhaften Ausgestaltung kann die Zuordnung des Identifikators zur Information im mobilen Endgerät hinterlegt werden. Wie bereits zuvor beschrieben wurde, hat dies den Vorteil, dass der Nutzer sein mobiles Endgerät nur einmalig mit dem Haushaltsgerät über das beschriebene Verfahren verknüpfen muss, um anschließend auf die eingerichtete Steuerverbindung zur Steuerung des Haushaltsgeräts zurückgreifen zu können.

Um eine nach erstmaliger Einrichtung erneut aufzubauende Steuerverbindung zwischen dem mobilen Endgerät und dem Haushaltsgerät sicher und/oder schnellstmöglich aufbauen zu können, kann es vorteilhaft sein, wenn der Identifikator Verbindungsdaten enthält. Beispielsweise kann es sich dabei um eine vorzugsweise codierte Kennung des Haushaltsgeräts handeln.

Weiter kann es vorteilhaft sein, insbesondere um eine sichere Steuerverbindung zwischen dem mobilen Endgerät und dem Haushaltsgerät aufzubauen, wenn die Information eine individuelle Zeichenfolge enthält, mit der sie eindeutig identifizierbar ist. Diese Zeichenfolge kann beispielsweise zufällig erzeugt sein. Mit der individuellen Zeichenfolge ist es einfach möglich, eine Verwechslung oder fehlerhafte Zuordnung zu vermeiden.

Besonders vorteilhaft kann es sein, wenn nach Einlesen der Information automatisch geprüft wird, ob eine zugehörige App zum Betrieb der Steuerverbindung installiert ist. Insbesondere kann es vorgesehen sein, dass eine Verbindung mit dem Internet zum Bezug der App aufgebaut wird, wenn dies nicht der Fall ist, und/oder dass die App aufgerufen wird, wenn dies der Fall ist.

Gemäß einer vorteilhaften Weiterbildung kann die Information unabhängig von dem Identifikator wählbar sein. Damit ist es möglich, die Information über eine Vielzahl von unterschiedlichen Signalgebern an das mobile Endgerät zu übermitteln und durch dieses auszulesen. Das mobile Endgerät muss im Grunde lediglich Empfangsmittel aufweisen, um in der Lage zu sein, die Information empfangen und auswerten zu können.

Ferner kann der maschinenspezifische Identifikator in der Information gespeichert werden kann und/oder vorab hinterlegt sein. Bevorzugt kann dabei sein, dass der Identifikator auf einem NFC Tag gespeichert wird oder ist. Besonders bevorzugt kann ein Nutzer durch Ausführen des Verfahrens zu einem Aufbau einer Steuerverbindung, wie es hierin beschrieben und/oder nachfolgend beansprucht ist, den Identifikator in der Information speichern. Nachfolgende Nutzer, die erstmalig ein maschinelles Einlesen der Information vornehmen, brauchen dann nicht das komplette Verfahren zu einem Aufbau der Steuerverbindung durchführen, sondern können die Steuerverbindung dadurch schneller einrichten, da bei dieser Ausgestaltung der Erfindung die Zuordnung der Information mit dem Identifikator direkt in der Information gespeichert wird.

Um das Verfahren möglichst standortunabhängig ausführen zu können, kann der Aufbau der Datenverbindung und/oder der Aufbau der Steuerverbindung lokal ausführbar sein. Insbesondere kann der Aufbau der Datenverbindung und/oder der Aufbau der Steuerverbindung ausführbar sein, wenn das mobile Endgerät und/oder das Haushaltsgerät vom Internet getrennt ist/sind.

Gemäß einer vorteilhaften Weiterbildung kann die Information mechanisch und/oder magnetisch und/oder elektromagnetisch und/oder akustisch und/oder optisch auslesbar sein. Besonders bevorzugt kann die Information auf einem RFID-Tag (auch als NFC-Tag bezeichnet) und/oder in einem optisch auslesbaren Code, insbesondere in einem eindimensionalen Code oder in einem zweidimensionalen Matrix-Code, bereitgehalten werden.

Gemäß einer weiteren vorteilhaften Weiterbildung kann die Zuordnung des Identifikators zur Information auf einem externen Speicher, insbesondere auf einem Server, abrufbar gespeichert werden. Die Zuordnung kann daher zentral gespeichert und bei erneutem Auslesen der Information vom externen Speicher abgerufen werden. Somit ist es zum Beispiel möglich, dass die auf dem externen Speicher gespeicherte Zuordnung auch durch neue mobile Endgeräte abgerufen und genutzt wird, vorzugsweise ohne dass auf diesem neuen Endgerät selbst das beschriebene komplette Verfahren zum Aufbau einer Steuerverbindung ausgeführt werden muss.

Die Erfindung betrifft weiter ein mobiles Endgerät, insbesondere ein Smartphone oder ein Tablet, mit Mitteln zur Ausführung eines Verfahrens, wie es hierin beschrieben und/oder beansprucht ist.

Die Erfindung betrifft außerdem einen Satz aus einem mobilen Endgerät, wie es hierin beschrieben und/oder beansprucht ist, und einem Haushaltsgerät, insbesondere einer Kaffeemaschine, wobei auf dem Haushaltsgerät, insbesondere in einem RFID-Tag und/oder in einem zweidimensionalen Matrix-Code, eine vorzugsweise zur Ausführung eines Verfahrens, wie es hierin beschrieben und/oder beansprucht ist, verwendbare Information bereitgehalten wird.

Die Erfindung betrifft weiter ein Verfahren zum Nachrüsten eines Haushaltsgeräts durch einen maschinenspezifischen Identifikator und/oder einer Information zur Durchführung des Verfahrens, wie es hierin beschrieben und/oder nachfolgend beansprucht ist. Dies ermöglicht es einem Nutzer, nachträglich eine vorzugsweise unspezifische Information seinem Haushaltsgerät zuzuordnen und mit einem maschinenspezifischen Identifikator seines Haushaltsgerätes zuzuordnen. Dies kann beispielsweise durch einen NFC Tag erfolgen, der an dem Haushaltsgerät angebracht oder zumindest in der Nähe angeordnet wird. Dies hat den Vorteil, dass ein Nutzer sein Haushaltsgerät auch zu einem späteren Zeitpunkt, zum Beispiel nach bereits erfolgter erster Inbetriebnahme, nachrüsten kann, um eine vorzugsweise alternative Steuerung über den Aufbau der Steuerverbindung einrichten zu können.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:

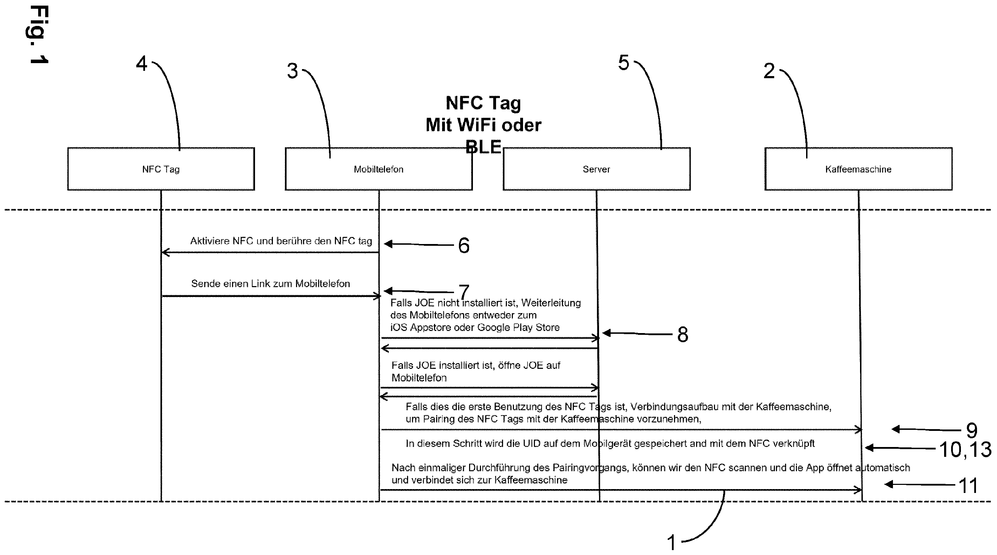

- Fig. 1: eine erste mögliche Ausführungsvariante eines erfindungsgemäßen Verfahrens zum Aufbau einer Steuerverbindung zwischen einem Haushaltsgerät und einem mobilen Endgerät, wobei als Träger der auslesbaren Information ein NFC Tag verwendet wird, um eine Datenverbindung herzustellen, wobei eine Zuordnung des Identifikators zur Information auf dem mobilen Endgerät erfolgt und darauf gespeichert wird, und wobei eine Steuerverbindung zwischen dem Haushaltsgerät und dem mobilen Endgerät schließlich über eine andere, vorzugsweise drahtlose Datenverbindung, wie zum Beispiel WiFi oder BLE (Bluetooth Low Energie), eingerichtet wird,

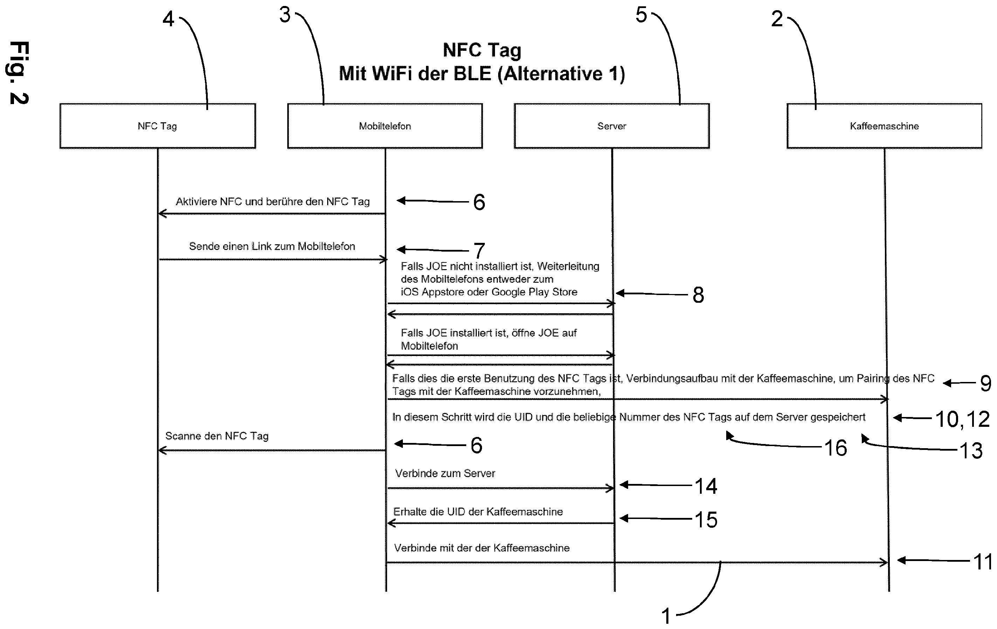

- Fig. 2: eine zweite mögliche Ausführungsvariante eines erfindungsgemäßen Verfahrens zum Aufbau einer Steuerverbindung zwischen einem Haushaltsgerät und einem mobilen Endgerät, wobei als Träger der auslesbaren Information ein NFC Tag verwendet wird, um eine Datenverbindung herzustellen, wobei eine Zuordnung des Identifikators zur Information auf dem externen Speicher gespeichert wird, und wobei eine Steuerverbindung zwischen dem Haushaltsgerät und dem mobilen Endgerät schließlich über eine andere, vorzugsweise drahtlose Datenverbindung, wie zum Beispiel WiFi oder BLE (Bluetooth Low Energie), eingerichtet wird,

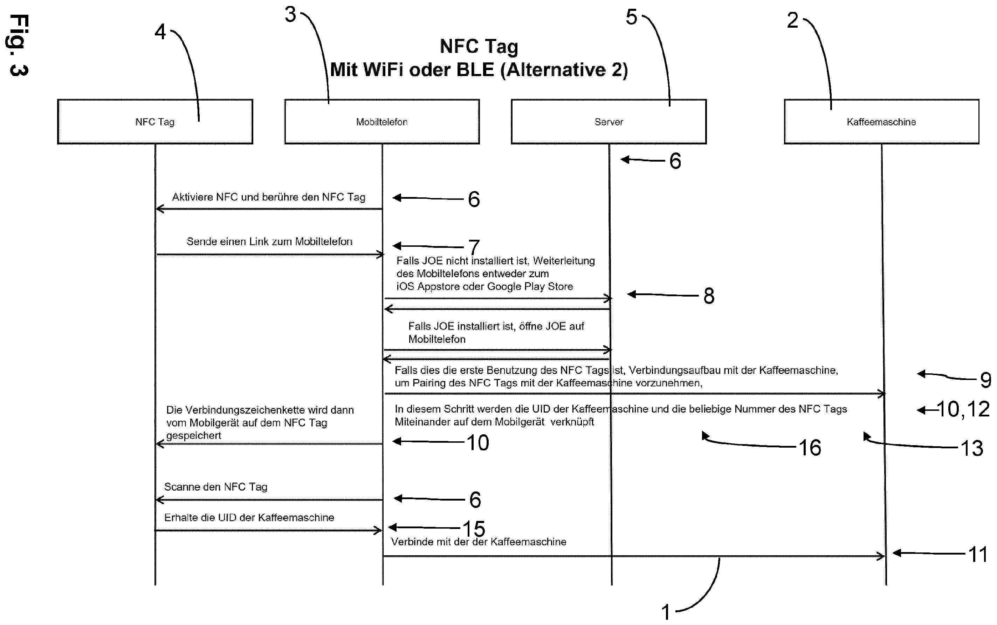

- Fig. 3: eine dritte mögliche Ausführungsvariante eines erfindungsgemäßen Verfahrens zum Aufbau einer Steuerverbindung zwischen einem Haushaltsgerät und einem mobilen Endgerät, wobei als Träger der auslesbaren Information ein NFC Tag verwendet wird, um eine Datenverbindung herzustellen, wobei eine Zuordnung des Identifikators zur Information auf dem mobilen Endgerät gespeichert wird, und wobei eine Steuerverbindung zwischen dem Haushaltsgerät und dem mobilen Endgerät schließlich über eine andere, vorzugsweise drahtlose Datenverbindung, wie zum Beispiel WiFi oder BLE (Bluetooth Low Energie), eingerichtet wird.

Die Fig. 1-3 zeigen jeweils in schematischer Weise Ausführungsbeispiele eines erfindungsgemäßen Verfahrens zum Aufbau einer Steuerverbindung 1 zwischen einem Haushaltsgerät 2 und einem mobilen Endgerät 3.

Das Haushaltsgerät 2 kann zum Beispiel als eine Kaffeemaschine, wie vorzugsweise als ein Kaffeevollautomat, ausgestaltet sein.

Das Haushaltsgerät 2 weist wenigstens eine Datenverbindungsvorrichtung zum Aufbau einer Datenverbindung 7 auf, um mit einem insbesondere lokalen, also im Empfangsbereich des Haushaltsgeräts befindlichen mobilen Endgerät 3 und/oder einem Netzwerk und/oder dem Internet verbunden werden zu können.

Das mobile Endgerät 3 kann zum Beispiel als ein Smartphone ausgestaltet sein. Das mobile Endgerät 3 weist wenigstens eine Datenverbindungsvorrichtung zum Aufbau einer Datenverbindung 7 auf, um mit einem entsprechend ausgestatteten insbesondere lokalen Haushaltsgerät und/oder einem Netzwerk und/oder dem Internet verbunden werden zu können.

Die Fig. 1-3 zeigen Ausführungsbeispiele, bei welchen das Haushaltsgerät 2 und das mobile Endgerät 3 über Datenverbindungsvorrichtungen mittels NFC und/oder WiFi und/oder BLE miteinander verbunden werden können.

Das erfindungsgemäße Verfahren dient dazu, eine Steuerverbindung 1 zwischen einem mobilen Endgerät 3 und einem mittels des mobilen Endgeräts 3 zu bedienenden Haushaltsgerät 2 herstellen zu können.

Am oder in der Nähe des Haushaltsgeräts 2, beispielsweise in oder an einem Gehäuseteil, ist zu diesem Zweck eine anhand des mobilen Endgeräts 3 vorzugsweise berührungslos einlesbare Information 4 angeordnet oder abrufbar. Die Information 4 muss dabei nicht zwingend direkt am Haushaltsgerät 2 angeordnet sein, sondern es ist lediglich erforderlich, dass ein Nutzer die Information 4 eindeutig einem Haushaltsgerät 2 zuordnet.

Somit erfolgt in diesem Schritt ein maschinelles Einlesen 5 der Information 4. Die Information 4 könnte jedoch auch in anderer Form, wie zum Beispiel durch einen grafisch scanbaren Matrix-Code, hinterlegbar sein. Ferner kann es sich bei der Information 4 um eine zufällig erzeugte Information 4, wie eine zufallsgenerierte Zeichenkennung oder Zeichenfolge handeln.

Grundsätzlich kann die Information 4 nach dem ersten Aufbau der Datenverbindung 7 um spezifische Verbindungsparameter ergänzt werden, um eine sichere und eindeutige Identifikation zu ermöglichen. Die genannten Verbindungsparameter können jedoch auch zusammen mit der nachfolgend noch genauer beschriebenen Zuordnung 11 des Identifikators 10 zur Information 4 gespeichert werden, vorzugsweise ohne dass dabei die ursprüngliche Information 4 verändert wird.

Bei den in den Fig. 1-3 gezeigten Ausführungsbeispielen ist die auslesbare Information 4 durch ein NFC Tag (RFID-Tag) hinterlegt und kann zum Beispiel eine zufallsgenerierte Nummer oder Kennung umfassen. Ist NFC am mobilen Endgerät 3 und ist der NFC Tag aktiviert, so kann eine Datenverbindung 7 zwischen dem mit dem Haushaltsgerät 2 gekoppelten NFC Tag und dem mobilen Endgerät 3 hergestellt werden.

Beim Aufbau der Datenverbindung 7 ist es möglich, dass ein Nutzer auf dem mobilen Endgerät 3 aufgefordert wird, eine Auswahl des zu verbindenden Haushaltsgeräts 2 vorzunehmen. Hierzu kann eine Liste aller zum Beispiel im Empfangsbereich des mobilen Endgeräts 3 befindlichen Verbindungsteilnehmer angezeigt werden, aus welcher der Nutzer manuell eine Auswahl treffen kann. Es ist auch denkbar, dass ein automatisierter Aufbau einer Datenverbindung 7 vorgenommen wird, zum Beispiel wenn sich nur ein Verbindungsteilnehmer im Empfangsbereich des mobilen Endgeräts 3 befindet.

Durch den zuvor beschriebenen Schritt des Aufbaus der Datenverbindung 7 wird auf dem mobilen Endgerät 3 vorzugsweise automatisiert ein Prüfungsschritt 8 initiiert, um zu prüfen, ob eine zur Steuerung des Haushaltsgeräts 2 mittels des mobilen Endgeräts 3 erforderliche Software (in den Fig. Ist die App als JOE abgekürzt) installiert ist. Anhand der Software ist es möglich, Bedienbefehle an das Haushaltsgerät 2 zu übermitteln.

Falls die Software noch nicht auf dem mobilen Endgerät 3 installiert ist, wird der Nutzer aufgefordert, eine Installation der Software auf dem mobilen Endgerät 3 vorzunehmen oder die Software wird automatisiert installiert.

Ist die Software bereits ordnungsgemäß installiert, wird durch den zuvor beschriebenen Schritt die Software auf dem mobilen Endgerät 3 gestartet.

Anschließend erfolgt ein weiterer Prüfungsschritt 9, bei welchem geprüft wird, ob zu der eingelesenen Information 4 in der Vergangenheit bereits eine Datenverbindung 7 aufgebaut worden ist und/oder ob zur Information 4 in der Vergangenheit bereits ein maschinenspezifischer Identifikator 10 zugeordnet wurde.

Wenn ein Ergebnis dieser Prüfung 9 negativ ist, also in der Vergangenheit bezogen auf die eingelesene Information 4 noch keine Datenverbindung 7 aufgebaut wurde und/oder noch kein maschinenspezifischer Identifikator 10 zugeordnet wurde, wird zunächst eine vorzugsweise direkte Datenverbindung 7 zwischen dem Haushaltsgerät 2 und dem mobilen Endgerät 3 zum Bezug eines maschinenspezifischen Identifikators 10 vom Haushaltsgerät 2 aufgebaut.

In einem darauffolgenden Zuordnungsschritt 11 wird dann der Identifikator 10 zur Information 4 zugeordnet und diese Zuordnung 11 gespeichert.

Gemäß einer optionalen Ausführungsvariante kann es vorgesehen sein, dass der maschinenspezifische Identifikator 10 und/oder dessen Zuordnung 11 zur Information 4 nach einmaliger Durchführung des Verfahrens zur Herstellung einer Steuerverbindung 1 mit in der Information 4 gespeichert wird. Ein späteres Einlesen der Information 4 durch ein anderes mobiles Endgerät 3 erlaubt somit einen direkten Aufbau der Steuerverbindung 1 mittels des anderen mobilen Endgeräts 3, ohne dass der zuvor beschriebene Zwischenschritt zum Aufbau Datenverbindung 7 zum Bezug eines maschinenspezifischen Identifikators 10 erforderlich ist.

Wenn das Ergebnis der Prüfung 9 jedoch positiv ist, also in der Vergangenheit bereits eine Datenverbindung 4 hergestellt wurde, so erfolgt eine Nutzung 12 des Identifikators 10 zum Aufbau der Steuerverbindung 1 zwischen dem Haushaltsgerät 2 und dem mobilen Endgerät 3. Der Identifikator 10 kann hierzu zum Aufbau der Steuerverbindung 1 erforderliche Verbindungsdaten enthalten, vorzugsweise ohne die der Aufbau der Steuerverbindung 1 nicht möglich wäre.

Die zuvor bereits genannte Information 4 kann grundsätzlich unabhängig vom Identifikator 10 sein. Erst durch den Zuordnungsschritt 11 werden diese beiden miteinander verknüpft.

Die Speicherung der Zuordnung 11 zwischen der eingelesenen Information 4 und dem maschinenspezifischen Identifikator 10 kann wie bei der in den Fig. 1 und 3 gezeigten Ausführungsbeispielen lokal, also im Haushaltsgerät 2 und/oder im mobilen Endgerät 3 gespeichert werden. Bei dieser Ausführungsvariante besteht der Vorteil, dass bei einem erneuten Einlesen 6 der Information mittels des mobilen Endgeräts 3 anhand des Prüfungsschritts 9 feststellbar ist, ob in der Vergangenheit bereits eine Datenverbindung 7 erfolgreich hergestellt worden ist. Für diesen Prüfungsschritt 9 ist es somit nicht erforderlich, dass das Haushaltsgerät 2 und/oder das mobile Endgerät 3 mit einem externen Speicher 5 und/oder dem Internet verbunden sind. Eine lokale Datenverbindung 7 zwischen den beiden Geräten ist dafür ausreichend, um schließlich eine Steuerverbindung 1 aufzubauen.

Fig. 2 zeigt ein weiteres Ausführungsbeispiel, bei welchem im Gegensatz zu den Ausführungsbeispielen gemäß den Fig. 1 und 3 keine lokale Speicherung der Zuordnung 11 zwischen Information 4 und maschinenspezifischen Identifikator 10 erfolgt, sondern die Zuordnung 11 auf einem externen Speicher 5, wie zum Beispiel einem Server, gespeichert wird.

In diesem Fall kann eine Prüfung 9, ob zu einer eingelesenen Information 4 in der Vergangenheit bereits eine Datenverbindung 7 aufgebaut worden ist, nur dann vorgenommen werden, wenn eine Verbindung des Haushaltsgeräts 2 und/oder des mobilen Endgeräts 3 zum externen Speicher 5 besteht oder wenn die Zuordnung 11 zusätzlich auch noch lokal im Haushaltsgerät 2 und/oder im externen Endgerät 3 gespeichert ist.

Die Speicherung der Zuordnung 11 auf einem externen Speicher 5 bietet allerdings den Vorteil, dass neue mobile Endgeräte 3, welche die zugeordnete Information 4 zuvor noch nicht eingelesen und/oder mobile Endgeräte 3, welche die Zuordnung 11 nicht lokal gespeichert haben, dennoch Zugriff auf die bereits abgespeicherte Zuordnung 11 des Identifikators 10 zur Information 4 haben, wenn die Information 4 in einem Leseschritt 6 eingelesen wird. Somit ist ein Empfang 15 der Zuordnung 11 durch Aufbau einer Verbindung 14 zum externen Speicher 5 möglich, anhand welcher dann der Aufbau der Steuerverbindung 1 vorgenommen wird.

### Bezugszeichenliste

- 1: Steuerverbindung
- 2: Haushaltsgerät
- 3: Mobiles Endgerät
- 4: Auslesbare Information
- 5: Externer Speicher
- 6: Einlesen der Information
- 7: Datenverbindung
- 8: Prüfung, ob App zum Betrieb der Steuerverbindung installiert ist und gegebenenfalls Installation der App
- 9: Prüfung einer bereits in der Vergangenheit aufgebauten Datenverbindung und/oder ob zur Information in der Vergangenheit bereits ein maschinenspezifischer Identifikator zugeordnet wurde
- 10: Bezug eines maschinenspezifischen Identifikators
- 11: Zuordnung des Identifikators zur Information
- 12: Aufbau einer Steuerverbindung
- 13: Speichern der Zuordnung des Identifikators zur Information
- 14: Verbindungsaufbau zum Server
- 15: Empfang der Zuordnung des Identifikators zur Information
- 16: Information wird modifiziert

## Patentansprüche

1. Verfahren zu einem Aufbau einer Steuerverbindung (1) zwischen einem Haushaltsgerät (2), insbesondere einer Kaffeemaschine, und einem mobilen Endgerät (3), insbesondere einem Smartphone, wobei an oder bei dem Haushaltsgerät (2) eine von außen auslesbare, von einem maschinenspezifischen Identifikator (10) unabhängige Information (4) angeordnet oder abrufbar ist,
wobei das Verfahren die folgenden Schritte beinhaltet:
- maschinelles Einlesen (6) der Information (4) anhand des mobilen Endgeräts (3),
- Prüfung, ob zu dieser Information (4) in der Vergangenheit bereits eine Datenverbindung aufgebaut und ein maschinenspezifischer Identifikator (10) zugeordnet worden ist (9), und,
- wenn ein Ergebnis der Prüfung negativ ist, Aufbau einer vorzugsweise direkten Datenverbindung (7) zwischen Haushaltsgerät (2) und mobilem Endgerät (3) zum Beziehen eines maschinenspezifischen Identifikators (10) vom Haushaltsgerät (2) und Zuordnung (11) des Identifikators (10) zur Information (4), oder,
- wenn das Ergebnis der Prüfung positiv ist, Nutzung des Identifikators (10) zum Aufbau der Steuerverbindung (12).

2. Verfahren nach Anspruch 1, wobei bei der Prüfung (9), ob zu dieser Information (4) in der Vergangenheit bereits eine Datenverbindung (7) aufgebaut worden ist, überprüft wird, ob im mobilen Endgerät (3) und/oder auf einem externen Speicher (5), insbesondere einem Server, und/oder bei dem Haushaltsgerät (2) ein zu der Information (4) zugeordneter maschinenspezifischer Identifikator (10) und/oder eine Information über eine erfolgreiche Prüfung in der Vergangenheit verfügbar ist.

3. Verfahren nach einem der vorangehenden Ansprüche, wobei beim Aufbau der Datenverbindung (7) das Haushaltsgerät (2) auf dem mobilen Endgerät (3) aus einer Liste von verfügbaren Verbindungsteilnehmern vorzugsweise manuell ausgewählt wird.

4. Verfahren nach einem der vorangehenden Ansprüche, wobei dieZuordnung (11) des Identifikators (10) zur Information (4) im mobilen Endgerät (3) und/oder bei dem Haushaltsgerät (2), insbesondere in der berührungslos auslesbaren Information (4), hinterlegt wird.

5. Verfahren nach einem der vorangehenden Ansprüche, wobei die Information (4) eine individuelle Zeichenfolge enthält, mit der sie eindeutig identifizierbar ist.

6. Verfahren nach einem der vorangehenden Ansprüche, wobei nach Einlesen (6) der Information (4) automatisch geprüft wird, ob eine zugehörige App zum Betrieb der Steuerverbindung installiert ist (8), insbesondere wobei eine Verbindung mit dem Internet zum Bezug der App aufgebaut wird, wenn dies nicht der Fall ist, und/oder wobei die App aufgerufen wird, wenn dies der Fall ist.

7. Verfahren nach einem der vorangehenden Ansprüche, wobei die Information (4) unabhängig von dem Identifikator (10) wählbar ist.

8. Verfahren nach einem der vorangehenden Ansprüche, wobei der Aufbau der Datenverbindung (7) und/oder der Aufbau (12) der Steuerverbindung (1) lokal ausführbar ist, insbesondere wenn das mobile Endgerät (3) und/oder das Haushaltsgerät (2) vom Internet getrennt ist/sind.

9. Verfahren nach einem der vorangehenden Ansprüche, wobei die Information (4) mechanisch und/oder magnetisch und/oder elektromagnetisch und/oder akustisch und/oder optisch auslesbar ist, vorzugsweise dass die Information (4) auf einem RFID-Tag und/oder in einem zweidimensionalen Matrix-Code bereitgehalten wird.

10. Verfahren nach einem der vorangehenden Ansprüche, wobei die Zuordnung (11) des Identifikators (10) zur Information (4) auf einem externen Speicher (5), insbesondere auf einem Server, abrufbar gespeichert wird.

11. Mobiles Endgerät (3), insbesondere Smartphone, mit Mitteln zur Ausführung eines Verfahrens nach einem der vorangehenden Ansprüche.

12. Satz aus einem mobilen Endgerät (3) nach Anspruch 11 und einem Haushaltsgerät (2), insbesondere einer Kaffeemaschine, wobei auf dem Haushaltsgerät (2), eine vorzugsweise zur Ausführung eines Verfahrens nach einem der Ansprüche 1 bis 10 verwendbare Information (4) bereitgehalten wird, vorzugsweise wobei die Information (4) mechanisch und/oder magnetisch und/oder elektromagnetisch und/oder akustisch und/oder optisch auslesbar ist.

13. Verfahren zum Nachrüsten eines Haushaltsgeräts (2), wobei an oder bei dem Haushaltsgerät eine von außen auslesbare, von einem maschinenspezifischen Identifikator unabhängige Information angeordnet wird und das Verfahrens nach einem der Ansprüche 1 bis 10 durchgeführt wird.

## Claims

1. Method for establishing a control connection (1) between a domestic appliance (2), in particular a coffee machine, and a mobile terminal device (3), in particular a smartphone, wherein information (4) that can be read from outside and is independent of a machine-specific identifier (10) is arranged on or near the domestic appliance (2) or can be retrieved from there, wherein the method contains the following steps of:
- machine reading (6) of the information (4) using the mobile terminal device (3),
- checking whether a data connection has already been established for this information (4) in the past and a machine-specific identifier (10) has been assigned (9), and,
- if the result of the check is negative, establishing a preferably direct data connection (7) between the domestic appliance (2) and the mobile terminal device (3) in order to obtain a machine-specific identifier (10) from the domestic appliance (2) and assigning (11) the identifier (10) to the information (4), or,
- if the result of the check is positive, using the identifier (10) to establish the control connection (12).

2. Method according to claim 1, wherein during the check (9) as to whether a data connection (7) has already been established to this information (4) in the past, it is checked whether a machine-specific identifier (10) assigned to the information (4) and/or information about a successful check in the past is available in the mobile terminal device (3) and/or on an external memory (5), in particular a server, and/or in the domestic appliance (2).

3. Method according to one of the preceding claims, wherein, when establishing the data connection (7), the domestic appliance (2) is preferably manually selected on the mobile terminal device (3) from a list of available connection participants.

4. Method according to one of the preceding claims, wherein the assignment (11) of the identifier (10) to the information (4) is stored in the mobile terminal device (3) and/or in the domestic appliance (2), in particular in the contactless readable information (4).

5. Method according to one of the preceding claims, wherein the information (4) contains an individual character string with which it can be uniquely identified.

6. Method according to one of the preceding claims, wherein after reading in (6) the information (4), it is automatically checked whether an associated app for operating the control connection is installed (8), in particular wherein a connection to the Internet is established to obtain the app if this is not the case, and/or wherein the app is called up if this is the case.

7. Method according to one of the preceding claims, wherein the information (4) can be selected independently of the identifier (10).

8. Method according to one of the preceding claims, wherein the establishment of the data connection (7) and/or the establishment (12) of the control connection (1) can be carried out locally, in particular if the mobile terminal device (3) and/or the domestic appliance (2) is/are disconnected from the Internet.

9. Method according to one of the preceding claims, wherein the information (4) can be read mechanically and/or magnetically and/or electromagnetically and/or acoustically and/or optically, preferably that the information (4) is stored on an RFID tag and/or in a two-dimensional matrix code.

10. Method according to one of the preceding claims, wherein the assignment (11) of the identifier (10) to the information (4) is stored in a retrievable manner on an external memory (5), in particular on a server.

11. Mobile terminal device (3), in particular smartphone, having means for carrying out a method according to one of the preceding claims.

12. Set consisting of a mobile terminal device (3) according to claim 11 and a domestic appliance (2), in particular a coffee machine, wherein information (4) usable preferably for carrying out a method according to one of claims 1 to 10 is provided on the domestic appliance (2), preferably wherein the information (4) is mechanically and/or magnetically and/or electromagnetically and/or acoustically and/or optically readable.

13. Method for retrofitting a domestic appliance (2), wherein information that can be read from the outside and is independent of a machine-specific identifier is arranged on or near the domestic appliance and the method according to one of claims 1 to 10 is carried out.

## Revendications

1. Procédé d'établissement d'une communication de commande (1) entre un appareil électroménager (2), en particulier une machine à café, et un terminal mobile (3), en particulier un smartphone, dans lequel une information (4) lisible de l'extérieur et indépendante d'un identifiant (10) spécifique de l'appareil est disposée ou peut être consultée sur l'appareil électroménager (2), le procédé comprenant les étapes suivantes :
- lecture par machine (6) de l'information (4) à l'aide du terminal mobile (3),
- vérification si une communication de données a déjà été établie par le passé pour cette information (4) et si un identifiant spécifique de l'appareil (10) a été affecté (9) et,
- si la vérification donne un résultat négatif, établissement d'une communication de données (7), de préférence directe, entre l'appareil électroménager (2) et le terminal mobile (3) en vue d'obtenir un identifiant spécifique de l'appareil (10) de l'appareil électroménager (2) et d'affecter (11) l'identifiant (10) à l'information (4) ou,
- si la vérification donne un résultat positif, utilisation de l'identifiant (10) pour établir la communication de commande (12).

2. Procédé selon la revendication 1, dans lequel, lors de la vérification (9) qu'une communication de données (7) a déjà été établie par le passé pour cette information (4), le système vérifie si un identifiant spécifique de l'appareil (10) associé à l'information (4) et/ou une information concernant une vérification passée réussie est disponible dans le terminal mobile (3) et/ou dans une mémoire externe (5), en particulier un serveur, et/ou sur l'appareil électroménager (2).

3. Procédé selon l'une des revendications précédentes dans lequel, lors de l'établissement de la communication de données (7), l'appareil électroménager (2) est sélectionné sur le terminal mobile (3), de préférence manuellement, dans une liste d'appareils disponibles pour participer à la communication.

4. Procédé selon l'une des revendications précédentes, dans lequel l'affectation (11) de l'identifiant (10) à l'information (4) est enregistrée dans le terminal mobile (3) et/ou dans l'appareil électroménager (2), en particulier dans l'information (4) lisible sans contact.

5. Procédé selon l'une des revendications précédentes, dans lequel l'information (4) contient une série de symboles individuelle qui permet de l'identifier sans équivoque.

6. Procédé selon l'une des revendications précédentes, dans lequel, après la lecture (6) de l'information (4), le système vérifie automatiquement si une application correspondante est installée (8) pour piloter la communication de commande, en particulier dans lequel une communication avec Internet pour l'obtention de l'appli est établie si ce n'est pas le cas et/ou dans lequel l'appli est appelée si c'est le cas.

7. Procédé selon l'une des revendications précédentes, dans lequel l'information (4) peut être sélectionnée indépendamment de l'identifiant (10).

8. Procédé selon l'une des revendications précédentes, dans lequel l'établissement de la communication de données (7) et/ou l'établissement (12) de la communication de commande (1) peuvent être exécutés localement, en particulier si le terminal mobile (3) et/ou l'appareil électroménager (2) sont coupés d'Internet.

9. Procédé selon l'une des revendications précédentes, dans lequel l'information (4) peut être lue par des moyens mécaniques et/ou magnétiques et/ou électromagnétiques et/ou acoustiques et/ou optiques, de préférence dans lequel l'information (4) est mise à disposition sur une puce RFID et/ou sur un code matriciel à deux dimensions.

10. Procédé selon l'une des revendications précédentes, dans lequel l'affectation (11) de l'identifiant (10) à l'information (4) est enregistrée sur une mémoire externe (5), en particulier sur un serveur, avec la possibilité de l'appeler.

11. Terminal mobile (3), en particulier smartphone, muni de moyens pour exécuter un procédé selon l'une des revendications précédentes.

12. Ensemble composé d'un terminal mobile (3) selon la revendication 11 et d'un appareil électroménager (2), en particulier une machine à café, dans lequel une information (4), utilisable de préférence pour l'exécution d'un procédé selon l'une des revendications 1 à 10, est mise à disposition sur l'appareil électroménager (2), de préférence dans lequel l'information (4) peut être lue par des moyens mécaniques et/ou magnétiques et/ou électromagnétiques et/ou acoustiques et/ou optiques.

13. Procédé pour la modification d'un appareil électroménager (2), dans lequel une information lisible de l'extérieur et indépendante d'un identifiant spécifique de l'appareil est disposée sur ou près de l'appareil électroménager et le procédé selon l'une des revendications 1 à 10 est exécuté.
